# FASCICULE DE BREVET EUROPEEN

(11) **EP 0 630 179 B1**
(45) Date de publication et mention de la délivrance du brevet: **08.05.1996**
(21) Numéro de dépôt: 93918744.9
(22) Date de dépôt: 09.03.1993
(51) Int. Cl.: A01B 59/048, B62D 49/08

(54) **DISPOSITIF DE RELEVAGE AVANT, POUR TRACTEUR AGRICOLE OU ANALOGUE**
FRONTKRAFTHEBER FÜR TRAKTOR ODER DERGLEICHEN
FRONT LIFTING DEVICE FOR TRACTORS OR SIMILAR

(30) Priorité: 12.03.1992 FR 9202952
(43) Date de publication de la demande: 28.12.1994
(73) Titulaire: Defrancq, Hubert, F-51140 Jonchery s/Vesle (FR)
(72) Inventeur: Defrancq, Hubert, F-51140 Jonchery s/Vesle (FR)
(74) Mandataire: Michardière, Bernard
(86) Numéro de dépôt international: FR9300228
(87) Numéro de publication internationale: WO9317542

(56) Documents cités:
- EP-A- 0 182 091
- EP-A- 0 274 853
- DE-A- 2 506 745
- DE-A- 3 314 684
- DE-A- 3 801 895
- FR-A- 2 511 574

## Description

L'invention est relative à un dispositif de relevage avant, pour tracteur agricole ou analogue, permettant d'atteler un outil à l'avant du tracteur en vue de le soulever et/ou de l'abaisser, ce dispositif étant du genre de ceux qui comprennent une ossature destinée à être fixée sur le châssis du tracteur, ladite ossature étant équipée, en partie basse, de moyens d'attache inférieurs s'étendant vers l'avant, articulés autour d'un axe transversal, et aux extrémités desquels peuvent venir s'accrocher les deux points bas d'accrochage d'un outil, et, en partie haute, d'un moyen d'attache supérieur médian, pour une liaison avec un troisième point d'accrochage de l'outil, et des moyens de relevage, en particulier hydrauliques, prévus entre l'ossature et les moyens d'attache inférieurs pour assurer les mouvements de montée ou de descente, les moyens d'attache inférieurs comprenant, d'une part, un bâti inférieur primaire articulé, à sa partie arrière, sur un axe transversal porté par l'ossature, et muni vers l'avant de deux extensions longitudinales latérales dans chacune desquelles est prévue un palier transversal, et, d'autre part, un avant-bras associé à chaque extension longitudinale et articulé autour d'un axe porté par le susdit palier, l'ensemble étant tel qu'en position de travail l'avant-bras prolonge l'extension latérale vers l'avant, ledit avant-bras s'étendant, vers l'arrière, au-delà de son axe d'articulation, cet avant-bras, lorsqu'il est libre de toute charge, pouvant être replié vers le haut, relativement à l'ossature, pour une position de stockage, un verrouillage fixe des avant-bras en position haute étant prévu.

Un dispositif de ce type est connu, notamment d'après EP-A-0 182 091.

On sait qu'un tel dispositif de relevage avant permet l'emploi simultané d'au moins deux outils avec un tracteur agricole, à savoir un outil poussé et un outil tracté. Toutefois, le développement des relevages avant se heurte à plusieurs difficultés qu'il convient de prendre en compte si l'on veut accroître leur diffusion.

Un problème se pose lorsque le dispositif de relevage avant n'est pas utilisé.

Selon EP-A-0 182 091 les avant-bras peuvent être placés et maintenus en position relevés, par les moyens de relevage, pour réduire autant que possible l'encombrement frontal du dispositif de relevage avant. Toutefois, en cas de manoeuvre erronée des moyens de relevage par l'opérateur, ce dernier peut provoquer la descente des avant-bras alors qu'une telle descente n'est pas souhaitée et peut être gênante, ou même dangereuse.

L'invention vise, notamment, à fournir un dispositif de relevage qui permette d'éviter des conséquences fâcheuses en cas d'actionnement des moyens de relevage, alors que les avant-bras sont relevés et doivent le rester.

Le dispositif de relevage peut aussi constituer une gêne, en particulier si l'opérateur souhaite monter à l'avant de son tracteur un chargeur frontal. Dans un tel cas, l'opérateur peut avoir à démonter au préalable le dispositif de relevage avant puis installer son chargeur frontal.

Cette opération de démontage du relevage avant, pendant la période où il n'est pas utilisé, constitue une contrainte gênante et un frein à l'expansion des dispositifs de relevage avant.

De plus, certains travaux doivent être réalisés alternativement et sont totalement incompatibles avec les opérations de montage-démontage répétées.

EP-A-0 274 853 décrit, certes, un dispositif de relevage permettant une compatibilité avec un chargeur frontal. Cependant, la conception de ce dispositif de relevage limite la garde au sol et le rayon de braquage au travail, car, pour un repli de chaque côté du tracteur, il faut un relevage suffisamment large qui interfère avec les roues lorsqu'elles sont braquées.

L'invention a pour but, surtout, de fournir un dispositif de relevage avant qui ne présente plus ou à un degré moindre les inconvénients rappelés ci-dessus. On souhaite que lorsque ce dispositif de relevage avant est en position de stockage, sur le tracteur, il ne puisse être mis en position de travail si les moyens de relevage sont actionnés par erreur ou accidentellement. On souhaite en outre que ce dispositif soit non seulement compatible avec un chargeur frontal mais aussi qu'il ne limite pas la maniabilité du tracteur. On souhaite également qu'un tel dispositif de relevage avant ne constitue pas un obstacle au passage d'une transmission de mouvement à partir de la prise de force avant du tracteur.

Il serait avantageux que le dispositif de relevage avant permette une flottation libre de l'outil si on le souhaite, ainsi qu'un réglage de l'inclinaison de l'outil, ou un verrouillage complet.

La mise en place et le réglage du dispositif de relevage avant doivent être aussi simples et rapides que possible.

Selon l'invention, un dispositif de relevage avant, pour tracteur agricole ou analogue, permettant d'atteler un outil à l'avant du tracteur en vue de le soulever et de l'abaisser, du genre défini précédemment, est caractérisé par le fait que les moyens de relevage sont reliés au bâti, inférieur et à l'ossature, que les deux avant-bras sont indépendants l'un de l'autre, que chaque avant-bras vient en appui par sa partie arrière, lorsqu'il est en position de travail, sous une butée solidaire du bâti de manière à se bloquer lors du relevage du bâti et du soulèvement d'une charge, et que le verrouillage fixe des avant-bras, en position haute du bâti permet d'empêcher un mouvement du bâti même si l'opérateur commande, par mégarde, les moyens de relevage.

Avantageusement, l'ossature comporte des moyens de verrouillage des avant-bras du bâti en position haute, par combinaison du mouvement du bâti inférieur mobile primaire, vers le haut, repli des avant-bras relativement au bâti vers le haut, et accrochage des avant-bras sur un organe de support et de verrouillage prévu sur l'ossature.

De préférence, l'organe de support et de verrouillage est constitué par un têton sur lequel vient s'accrocher l'extrémité des avant-bras.

En variante, pour réaliser le verrouillage du dispositif, lorsqu'il n'est pas utilisé, l'ossature peut comporter, en partie haute, des paliers semblables à ceux portés par les extensions du bâti inférieur, ces paliers étant munis, lorsque l'ensemble est en position de travail, d'axes auxiliaires semblables à ceux des avant-bras, munis de prolongements plus longs que ceux des avant-bras, l'ensemble étant tel que pour le verrouillage des avant-bras, en position haute du bâti inférieur, les axes auxiliaires des paliers de l'ossature sont retirés de ces paliers, tandis que les avant-bras sont démontés des extensions et retournés de manière à être placés à l'intérieur de l'ossature avec leurs axes reçus dans les paliers hauts de l'ossature, tandis que les axes auxiliaires sont montés dans les paliers des extensions latérales avec leurs prolongements tournés vers l'intérieur, l'ensemble étant tel que les extrémités des avant-bras viennent s'accrocher sur les prolongements desdits axes auxiliaires lorsque le bâti inférieur est relevé.

Chaque extension latérale peut comprendre deux membrures séparées par un espace dans lequel est reçu un organe de liaison constituant une extrémité des moyens de relevage, cet organe étant lié à l'extension par un axe traversant des ouvertures prévues dans les membrures, tandis que le palier prévu à l'extrémité de l'extension latérale est constitué par un manchon d'axe transversal.

L'axe d'articulation de chaque avant-bras peut être fixé sur ce dernier de manière à pouvoir s'insérer rapidement dans le palier de l'extension correspondante, sans outillage, le bras étant situé à l'extérieur de l'extension.

L'axe fixé sur chaque avant-bras peut comporter un prolongement de diamètre plus faible destiné à se trouver entre les extensions du bâti lorsque le bras est monté, ce prolongement pouvant servir le cas échéant à l'accrochage d'accessoires, notamment à l'accrochage d'un porte-masse.

Avantageusement, le prolongement est muni de moyens d'arrêt de l'axe relativement au palier, avec interposition éventuelle de rondelles, suivant la direction axiale de ce palier.

Le prolongement de chaque axe a une longueur réduite de sorte qu'un espace suffisant existe entre les extrémités en regard des prolongements, lorsque les deux avant-bras sont montés, pour le passage d'une transmission mécanique à partir de la prise de force avant du tracteur.

Chaque avant-bras peut comporter, vers son extrémité arrière, un piton orienté sensiblement orthogonalement à la direction longitudinale de l'avant-bras et situé au-delà de l'axe d'articulation de l'avant-bras, ce piton étant propre à traverser une ouverture prévue dans une butée solidaire du bâti, située au-dessus de la partie arrière de l' avant-bras.

Le piton reçoit un jeu de rondelles d'épaisseur variable et est muni de moyens d'arrêt de l'oscillation de l' avant-bras, de manière à permettre divers réglages possibles pour cet avant-bras, à savoir oscillant, fixe, ou à inclinaison forcée.

Les moyens d'arrêt de l'axe d'un avant-bras, relativement au palier peuvent être agencés pour permettre un déverrouillage rapide de l'avant-bras en vue d'un coulissement transversal de sorte que lorsque l' avant-bras est équipé à son extrémité d'une rotule à alésage, il soit possible, par coulissement transversal, d'amener l'alésage de cette rotule en face d'un têton porté par l'ossature, en position haute de stockage, et par un coulissement en sens inverse, d'engager le têton dans l'alésage de ladite rotule pour assurer le verrouillage en position de stockage.

Le dispositif peut être agencé de telle sorte que les avant-bras repliés, en position de stockage, présentent une face avant sensiblement verticale ayant fonction de bouclier.

L'invention consiste, mises à part les dispositions exposées ci-dessus, en un certain nombre d'autres dispositions dont il sera plus explicitement question ci-après à propos d'exemples de réalisation décrits avec référence aux dessins ci-annexés, mais qui ne sont nullement limitatifs.

La figure 1, de ces dessins, est une vue de côté, en élévation, d'un dispositif d'attelage selon l'invention.

La figure 2 est une vue partielle, de gauche par rapport à la figure 1, de l'ossature.

La figure 3 est une vue en plan du dispositif d'attelage de la figure 1.

La figure 4 est une coupe suivant la ligne IV-IV figure 3.

La figure 5, enfin, est une vue partielle, de face d'une variante de réalisation du dispositif d'attelage avant, en position de stockage.

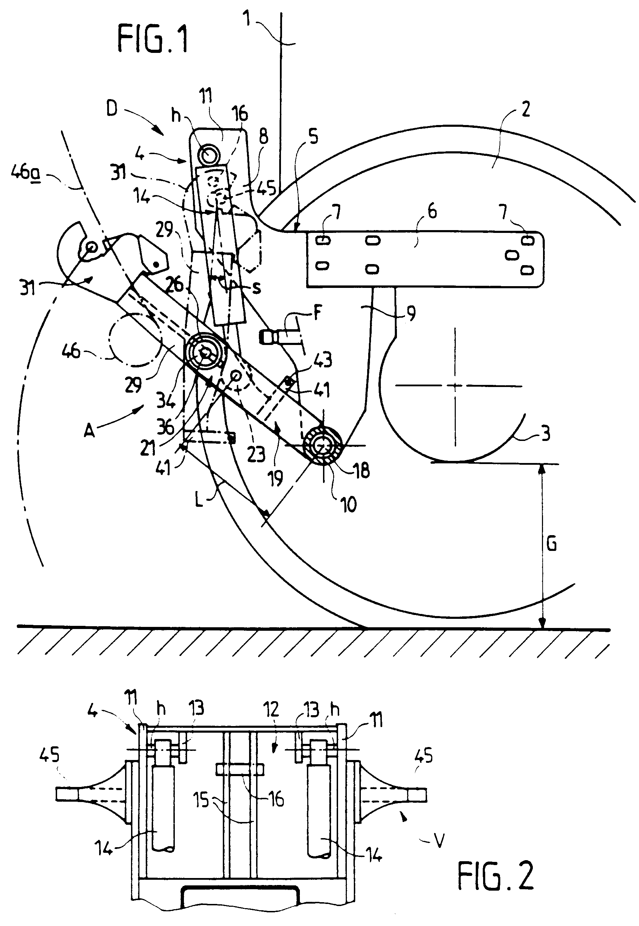

En se reportant aux dessins, plus particulièrement aux figures 1 à 3, on peut voir un dispositif de relevage avant D pour un tracteur agricole 1 très sommairement représenté, dont une roue avant 2 est également sommairement représentée. La garde au sol G du tracteur 1 à l'avant correspond à la distance entre le sol et le point le plus bas du contour 3 enveloppant les parties inférieures de l'essieu avant, ou analogue.

Le dispositif D comprend une ossature 4 destinée à être fixée sur le châssis du tracteur 1. L'ossature 4 comprend deux flancs extérieurs tels que 5 fixés respectivement à droite et à gauche du châssis du tracteur entre les roues avant. Chaque flanc 5 comprend une plaque rectangulaire 6 située dans un plan sensiblement vertical, dont la grande dimension est horizontale, cette plaque comportant plusieurs trous 7 vers ses extrémités avant et arrière pour la fixation sur le châssis dans une zone située au-dessus de l'axe de la roue 2. Une console 8 fait saillie vers le haut à l'avant de la plaque 6 ; cette console 8 est constituée notamment par une tôle verticale sensiblement coplanaire à la plaque 6, soudée à cette plaque. La console 8 comporte un brancard 9 s'étendant vers le bas et dont l'extrémité inférieure 10 est située à une distance du sol égale ou supérieure à la distance G. La console 8 comporte en outre un montant 11 s'étendant à un niveau supérieur à la plaque 6, vers l'avant.

Une partie centrale 12 de l'ossature assure une liaison rigide entre les parties hautes des montants 11. Comme visible sur la figure 2, vers les extrémités latérales de la partie centrale, des goussets 13 sont fixés, notamment par soudure, à distance réduite des montants 11. Un trou est prévu dans le montant 11 et le gousset 13 voisin pour servir de support à un axe h servant à une fixation articulée d'un vérin hydraulique 14 constituant un moyen de relevage, de chaque côté. De part et d'autre du plan médiateur de la partie centrale 12 sont prévues des plaquettes 15 comportant des trous en regard pour servir de support à un axe 16 servant à attacher une barre de troisième point telle que la barre 17 représentée sur la figure 7.

L'ossature 4 est équipée, en partie basse, de moyens d'attache inférieurs A articulés autour d'un axe transversal 18 porté par des paliers prévus au voisinage de l'extrémité inférieure 10 des brancards 9. Il apparaît ainsi que le point inférieur d'accrochage des moyens A ne provoque pas de réduction de la garde au sol G du tracteur, ni d'interférence avec une prise de force avant F. Les deux points bas d'accrochage latéraux d'un outil, non représenté, viennent s'accrocher à l'avant des moyens d'attache A.

La position dans un plan horizontal de l'axe de rotation 18 des brancards est choisie de sorte que le bras de levier L défini par rapport à la position du point d'ancrage des vérins 14 soit suffisant pour que le diamètre du cylindre des vérins 14 reste compatible avec la place nécessaire pour introduire et extraire l'axe 16 d'accrochage du troisième point.

Les moyens d'attache A comprennent un bâti inférieur primaire 19 articulé, à sa partie arrière, sur l'axe transversal 18. Le bâti 19 est muni, vers l'avant, de deux extensions longitudinales latérales 20, 21. Chaque extension latérale comprend deux membrures 20a, 20b, 21a, 21b séparées par un espace dans lequel est reçue un organe de liaison tel qu'une rotule 22, 23 montée à l'extrémité de la tige de chaque vérin 14 de relevage. La rotule 22, 23 est liée à l'extension correspondante 20, 21, par un axe traversant cette chape et reçue, à ses extrémités, dans des trous 24, prévus dans chaque membrure.

En avant des trous 24, mais à distance aussi réduite que possible compte tenu de l'encombrement des rotules 22, 23 et du passage de la tige du vérin 14, est prévu un palier transversal 25, 26 constitué par un manchon tubulaire d'axe transversal parallèle à l'axe d'articulation 18 du bâti 19. Ce manchon 25, 26 est fixé, en 27, sur ces membrures, notamment par soudage. Les paliers 25, 26, ouverts permettent de loger aisément des bagues d'usure facilitant la maintenance.

Les moyens d'attache A inférieurs comprennent deux avant-bras 28,29 associés respectivement à chaque extension latérale 20, 21. Chaque avant-bras est coudé de sorte que sa partie avant s'écarte de la direction centrale moyenne, la concavité du bras étant tournée vers l'extérieur. Ceci permet d'obtenir, entre les extrémités avant des avant-bras, une distance conforme aux normes d'attelage. Un voile raidisseur 30, par exemple soudé, est prévu dans la concavité de chaque bras. A l'extrémité avant de chaque avant-bras est fixée, par soudure, soit une main 31 (figure 1) à verrouillage automatique, ouverte vers le haut et permettant un encliquetage d'un axe par un simple mouvement vertical de descente, soit un dispositif 32 à rotule à alésage fermé dans laquelle l'engagement d'un arbre doit s'effectuer suivant la direction axiale de l'alésage de la rotule.

Un axe d'articulation 33, 34 est fixé sur la face interne des avant-bras respectifs 28, 29, suivant une direction orthogonale à l'avant-bras. Cet axe 33, 34 a un diamètre extérieur égal, au jeu de fonctionnement près, à celui de l'alésage du palier 25, 26, correspondant, de manière à pouvoir être inséré rapidement depuis l'extérieur, dans le palier, et en être démonté, sans outillage.

Chaque axe 33, 34 comporte un prolongement de faible diamètre 35, 36, coaxial, destiné à se trouver dans l'espace compris entre les extensions 20, 21 du bâti, lorsque l'avant-bras est monté. Chaque prolongement 35, 36 est muni, à son extrémité intérieure, d'un moyen d'arrêt constitué par exemple par un alésage diamétral 37 propre à recevoir une goupille 37a qui, combinée avec une entretoise 38 engagée sur le prolongement 35 et prenant appui contre la face intérieure du palier 25 ou 26, permet de bloquer transversalement l'avant-bras correspondant relativement au bâti 19, tout en laissant une liberté de rotation à cet avant-bras autour de l'axe du palier.

Comme expliqué plus loin, les prolongements 35, 36 permettent la fixation d'un porte-masse illustré sur les figures 6 et 7. La longueur de ces prolongements 35, 36 est suffisante pour assurer un accrochage satisfaisant, mais n'est pas trop importante pour qu'un espace libre subsiste entre les extrémités internes en regard des prolongements 35, 36 pour permettre le passage d'une transmission à partir de la prise de force avant F du tracteur.

Chaque avant-bras 28, 29 s'étend, vers l'arrière, au-delà de son axe d'articulation 35, 36 selon une branche 28a, 29a. L'extrémité arrière de chaque branche 28a, 29a vient en appui sous une butée 39, 40.

Ces butées 39, 40 peuvent être constituées par des plaques épaisses fixées sous le bâti 19, notamment par soudage, et débordant latéralement du contour de ce bâti, au-dessus des extrémités arrière des avant-bras. Lors du mouvement de levée du bâti 19, si une charge est accrochée à l'extrémité des avant-bras 28, 29, ces derniers se trouvent bloqués en rotation par les butées 39 et 40. Par contre, les avant-bras 28, 29, peuvent être repliés vers le haut, l'extrémité arrière de ces avant-bras s'écartant alors des butées 39, 40.

Il est à noter que les avant-bras 28, 29 sont indépendants et peuvent pivoter de manière différente, ce qui permet à un outil, porté par ces bras, d'effectuer un mouvement de rotation autour d'une pluralité d'axes longitudinaux, pour une flottation libre assurant un suivi du relief.

Chaque avant-bras comporte, vers son extrémité arrière, un piton 41 dirigé vers le haut, sensiblement orthogonal à la direction longitudinale de l' avant-bras. Ce piton 41, constitué par exemple par un morceau de tige cylindrique, est propre à traverser une ouverture allongée 42 prévue dans la butée correspondante 39, 40. Le piton 41 comporte, vers son extrémité haute, un moyen d'arrêt avantageusement constitué par la combinaison d'un trou diamétral 43 et d'une goupille 43a, engagée dans ce trou, pour bloquer ou limiter l'oscillation possible de l'avant-bras relativement au bâti 19.

Le réglage est obtenu en enfilant sur le piton 41, des rondelles 44. Lorsque toutes les rondelles sont disposées au-dessus de la butée 40, 41 et ne laissent pas de jeu vertical entre leur face supérieure et la goupille 43a, l' avant-bras n'a aucune liberté d'oscillation. Par contre, si un jeu vertical subsiste, l' avant-bras conserve une certaine liberté d'oscillation jusqu'à venue en contact de la goupille 43a avec la rondelle supérieure. Il est également possible de placer des rondelles telles que 44 au-dessous des butées 39, 40 de manière à imposer une inclinaison forcée à l' avant-bras correspondant.

Comme visible sur la figure 2, l'ossature 4 comporte, en partie haute, des moyens de verrouillage V du dispositif de relevage en position haute de stockage, lorsque ce dispositif n'est pas utilisé. La position de verrouillage illustrée en traits mixtes sur la figure 1 est obtenue par combinaison du mouvement du bâti inférieur 19 vers le haut et repli des avant-bras 28, 29, relativement au bâti 19, vers le haut après retrait des goupilles éventuelles prévues sur les pitons 41. Les moyens de verrouillage V comprennent en saillie latérale de chaque côté de l'ossature 4, en partie haute, un têton 45 fixé rigidement sur l'ossature. Ce têton 45 peut être soit équipé d'une boule utilisée pour l'accrochage des outils et sur laquelle vient s'accrocher la main à verrouillage automatique 31, soit engagé dans l'alésage de la main à rotule 32, lorsque les vérins 14 sont dans la position de relevage maximum et que l' avant-bras correspondant est basculé vers le haut.

L'ensemble est conçu de manière que dans cette position de verrouillage, comme visible sur la figure 1, 1' avant-bras 28, 29 soit sensiblement vertical et constitue un bouclier. En outre, l'angle s formé entre l'axe du vérin 14 et la direction moyenne de l'avant-bras 29 verrouillé en position haute est relativement faible, inférieur à 30°. Si par mégarde l'opérateur commande la sortie de la tige du vérin 14, l'avant-bras travaille essentiellement en traction ; le verrouillage est suffisant pour résister à l'effort engendré par les vérins 14.

Le verrouillage fixe en position haute selon l'invention permet à la fois :
- d'empêcher le bâti 19 et les avant-bras 28, 29 de descendre ;
- d'empêcher les avant-bras de tourner relativement au bâti.

Ces deux fonctions réalisées en une seule opération permettent d'éviter des erreurs.

Le distributeur hydraulique utilisé pour le fonctionnement des vérins 14 peut être libéré, après débranchement de prises hydrauliques de raccordement des vérins, pour un autre usage.

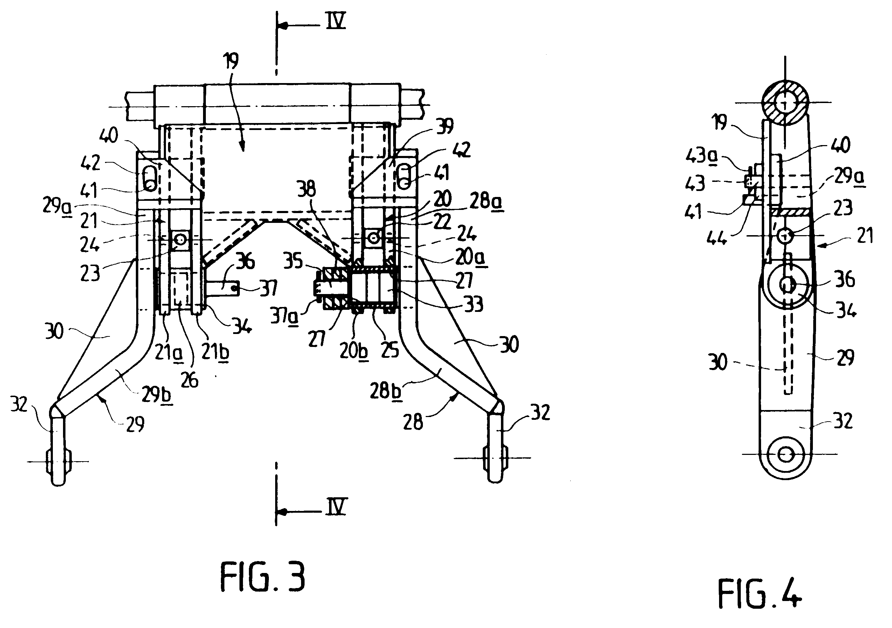

Si les avant-bras sont équipés de mains à rotule 32 comme illustré sur la figure 2 au lieu des mains à verrouillage automatique de la figure 4, il faut opérer de la manière suivante pour engager les têtons de verrouillage 45 dans ces rotules.

On déverrouille les axes 33, 34 en retirant les goupilles 37a des trous 37 et, après avoir dégagé le pion 41 des ouvertures 42, on tire vers l'extérieur, sur chaque avant-bras pour l'écarter de l'extension 20, 21 correspondante. Dans ces conditions, lorsque l'on bascule le bras vers le haut, la rotule 32 se trouvera axialement déportée vers l'extérieur par rapport au têton 45 et son alésage peut être aligné sur ce têton. En repoussant l' avant-bras contre l'extension associée, on peut alors engager le têton 45 dans la rotule correspondante 32 et assurer le verrouillage en position haute du dispositif de relevage pour le stockage.

L'ensemble est conçu de manière qu'en position de stockage représentée sur la figure 1, le dispositif de relevage n'interfère pas avec un chargeur frontal monté à l'avant du tracteur, et dont seul l'élément situé le plus en arrière, à savoir une traverse 46, est représenté. La portion de courbe 47 représente une partie de la trajectoire de la traverse 46 lors des mouvements du chargeur frontal, cette courbe 47 constituant en quelque sorte la limite avec laquelle ne doit pas interférer le dispositif de relevage pour laisser libres les mouvements du chargeur frontal.

Les vérins 14 peuvent travailler en double effet.

Le fonctionnement et l'utilisation du dispositif de relevage résultent immédiatement des explications qui précèdent.

Lorsque ce dispositif est en position de travail, les avant-bras 28, 29 prolongent les extensions latérales et les pitons 41 sont engagés dans les ouvertures 42. Selon le réglage adopté, les avant-bras peuvent être immobilisés en rotation relativement au bâti 19 par un jeu de rondelles 44 d'épaisseur suffisante, ou peuvent conserver une certaine liberté en oscillation permettant un suivi du relief. Les mouvements de montée ou de descente de l'outil sont commandés par les vérins 14.

Pour la mise en position de stockage, alors que les avant-bras ont été libérés de l'outil, l'utilisateur commande, depuis la cabine du tracteur, la mise en position haute extrême du bâti 19 en faisant entrer au maximum la tige des vérins 14 dans les cylindres correspondants.

L'opérateur peut ensuite, au sol, déverrouiller successivement chaque piton 41 et basculer l' avant-bras correspondant vers le haut jusqu'à son verrouillage sur un têton 45, en position sensiblement verticale.

Les opérations sont facilitées par le fait qu'un seul avant-bras est à manipuler, successivement.

On remarquera que les extrémités avant 28b, 29b coudées vers l'extérieur des avant-bras 28, 29 permettent de réduire sensiblement la dimension transversale du bâti 19 tout en conservant, au niveau des mains d'accrochage 31, 32, la largeur habituelle.

Lorsque les bras sont en position de travail, les parties coudées 28b, 29b, sont relativement en avant et le risque d'interférence avec les roues telles que 2 du tracteur, lors d'un braquage, sont inexistants.

Par contre, pour certaines configurations, il est possible que dans la position relevée de stockage, les parties coudées 28b, 29b des avant-bras soient susceptibles d'interférer avec les roues directrices si les bras demeurent à l'extérieur de l'ossature 4 comme pour l'exemple de réalisation des figures 1 à 4.

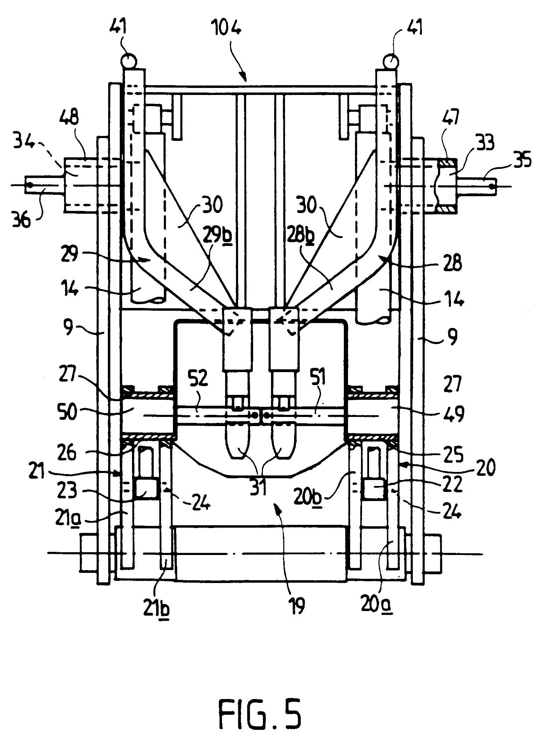

Pour éviter un tel problème, on prévoit, comme illustré sur la figure 5, une ossature 104, munie, en partie haute, de chaque côté, de paliers transversaux 47, 48 semblables aux paliers 25 et 26 de la figure 2, de sorte que les axes 33, 34 puissent être introduits dans ces paliers 47, 48 lorsqu'on le souhaite.

Des axes auxiliaires 49, 50 sont normalement logés dans ces paliers 47, 48. Ces axes comportent des prolongements 51, 52 coaxiaux, de diamètre réduit, égal à celui des prolongements 35, 36. Lorsque le dispositif de relevage est en position de travail, les axes auxiliaires 49, 50 sont portés par les paliers 47,48 et les prolongements 51, 52 font saillie vers l'extérieur.

Par contre, dans la position de stockage illustrée sur la figure 5, les axes 49, 50 ont été extraits des paliers 47, 48 pour être montés dans les paliers 25, 26. Les prolongements 51, 52 sont plus longs que les prolongements 35, 36 de sorte que lorsque les axes 49, 50 sont montés dans les paliers 25, 26 à la place des axes 33, 34, les extrémités intérieures des prolongements 51, 52 sont voisines les unes des autres sans être en contact. Le bâti inférieur 19 et les avant-bras sont identiques à ceux décrits avec référence aux figures précédentes.

Lorsque l'opérateur souhaite placer le dispositif de relevage en position de stockage, il effectue le démontage des avant-bras 28, 29 relativement au bâti, en dégageant les goupilles des prolongements 35 et 36 et en extrayant les axes des paliers 25, 26.

L'opérateur extraie ensuite les axes 49, 50 des paliers 47 et 48 qui sont ainsi libres.

L'opérateur fait alors subir aux avant-bras 28, 29 un retournement de 180°autour d'un axe sensiblement vertical de telle sorte que la concavité de chaque avant-bras coudé soit tournée vers l'intérieur.

L'opérateur place l'avant-bras 28 à l'intérieur de l'ossature 104 en engageant l'axe 33 dans le palier 47, l'extrémité de l'avant-bras 28 munie de la main 31 étant dirigée vers le bas (voir figure 5).

L'opérateur agit de la même manière pour le bras 29 dont l'axe 34 est introduit dans le palier 48 (figure 5).

Les mains des avant-bras sont voisines l'une de l'autre.

L'opérateur commande ensuite le relevage du bâti 19 en position haute extrême. Les paliers 25 et 26 sont ainsi amenés à la hauteur des mains des avant-bras 28, 29.

Pour verrouiller ces mains, l'opérateur introduit dans les paliers 25, 26 en position haute, les axes auxiliaires 49, 50 avec leurs prolongements 51, 52 tournés vers le plan moyen longitudinal de l'ossature.

Dans le cas de mains 32 à rotule, les prolongements 51, 52 sont engagés dans les alésages de ces rotules par le mouvement de translation.

Dans le cas de mains 31 à verrouillage automatique, on peut d'abord mettre en place les axes auxiliaires 49, 50 dans les paliers relevés 25, 26 puis assurer le verrouillage des mains 31 sur le prolongement correspondant 51, 52 par un mouvement de pivotement de l'avant-bras autour du palier 49 ou 50.

Dans cette position de stockage du dispositif de relevage on retrouve tous les avantages décrits à propos des figures précédentes ; en outre l'encombrement transversal est réduit au minimum puisque les avant-bras 28, 29 se trouvent entre les parties latérales de l'ossature, de sorte que les risques d'interférence avec les roues avant du tracteur, lors d'un braquage, sont supprimés.

## Revendications

1. Dispositif de relevage avant, pour tracteur agricole ou analogue, permettant d'atteler un outil à l'avant du tracteur en vue de le soulever et/ou de l'abaisser, comprenant une ossature (4, 104) destinée à être fixée sur le châssis du tracteur, ladite ossature étant équipée, en partie basse, de moyens d'attache inférieurs (A) s'étendant vers l'avant, articulés autour d'un axe transversal, et aux extrémités desquels peuvent venir s'accrocher les deux points bas d'accrochage d'un outil, et, en partie haute, d'un moyen d'attache supérieur médian (16), pour une liaison avec un troisième point d'accrochage de l'outil, et des moyens de relevage (14), en particulier hydrauliques, prévus entre l'ossature (4, 104) et les moyens d'attache inférieurs pour assurer les mouvements de montée ou de descente, les moyens d'attache inférieurs (A) comprenant, d'une part, un bâti inférieur primaire (19) articulé, à sa partie arrière, sur un axe transversal (18) porté par l'ossature (4, 104), et muni vers l'avant de deux extensions longitudinales (20, 21) latérales dans chacune desquelles est prévu un palier transversal (25, 26), et, d'autre part, un avant-bras (28, 29) associé à chaque extension longitudinale (20, 21) et articulé autour d'un axe (33, 34) porté par le susdit palier, l'ensemble étant tel qu'en position de travail l'avant-bras (28, 29) prolonge l'extension latérale vers l'avant, ledit avant-bras s'étendant, vers l'arrière, au-delà de son axe d'articulation, cet avant-bras (28, 29), lorsqu'il est libre de toute charge, pouvant être replié vers le haut, relativement à l'ossature (4, 104), pour une position de stockage, un verrouillage fixe des avant-bras (28, 29) en position haute étant prévu, caractérisé par le fait que les moyens de relevage (14) sont reliés au bâti inférieur (19) et à l'ossature (4, 104), que les deux avant-bras (28, 29) sont indépendants l'un de l'autre, que chaque avant-bras (28, 29) vient en appui par sa partie arrière, lorsqu'il est en position de travail, sous une butée (39, 40) solidaire du bâti (19) de manière à se bloquer lors du relevage du bâti et du soulèvement d'une charge, et que le verrouillage fixe des avant-bras (28, 29) en position haute du bâti (19) permet d'empêcher un mouvement du bâti (19) même si l'opérateur commande, par mégarde, les moyens de relevage (14).

2. Dispositif selon la revendication 1, caractérisé par le fait que l'ossature (4) comporte des moyens de verrouillage (V) des avant-bras (28, 29) du bâti (19) en position haute, par combinaison du mouvement du bâti inférieur mobile primaire (19), vers le haut, repli des avant-bras (28, 29) relativement au bâti vers le haut, et accrochage des avant-bras (28, 29) sur un organe de support et de verrouillage (45) prévu sur l'ossature (4).

3. Dispositif selon la revendication 2, caractérisé par le fait que l'organe de support et de verrouillage est constitué par un têton (45).

4. Dispositif selon la revendication 3, caractérisé par le fait que l'extrémité des avant-bras (28, 29) vient s'accrocher sur le têton (45) .

5. Dispositif selon la revendication 1, caractérisé par le fait que pour réaliser le verrouillage du dispositif, lorsqu'il n'est pas utilisé, l'ossature (104) comporte, en partie haute, des paliers (47, 48) semblables à ceux (25, 26) portés par les extensions (20, 21) du bâti inférieur (19), ces paliers (47, 48) étant munis, lorsque l'ensemble est en position de travail, d'axes auxiliaires (49, 50) semblables à ceux (33, 34) des avant-bras, munis de prolongements (51, 52) plus longs que ceux (35, 36) des avant-bras, l'ensemble étant tel que pour le verrouillage des avant-bras (28, 29), en position haute du bâti inférieur (19), les axes auxiliaires (49, 50) des paliers de l'ossature (104) sont retirés de ces paliers (47, 48) , tandis que les avant-bras (28, 29) sont démontés des extensions (20, 21) et retournés de manière à être placés à l'intérieur de l'ossature (104) avec leurs axes (33, 34) reçus dans les paliers hauts (47, 48) de l'ossature, tandis que les axes auxiliaires (49, 50) sont montés dans les paliers (25, 26) des extensions latérales (20, 21) avec leurs prolongements (51, 52) tournés vers l'intérieur, l'ensemble étant tel que les extrémités des avant-bras (28, 29) viennent s'accrocher sur les prolongements desdits axes auxiliaires lorsque le bâti inférieur (19) est relevé.

6. Dispositif selon la revendication 1 ou 5, caractérisé par le fait que chaque extension latérale (20, 21) comprend deux membrures (20a, 20b ; 21a, 21b) séparées par un espace dans lequel est reçu un organe de liaison (22 23) constituant une extrémité des moyens de relevage (14), cet organe étant lié à l'extension par un axe (24) traversant des ouvertures prévues dans les membrures, tandis que le palier prévu à l'extrémité de l'extension latérale est constitué par un manchon d'axe transversal (25, 26).

7. Dispositif selon la revendication 6, caractérisé par le fait que l'axe d'articulation (33, 34) de chaque avant-bras (28, 29) est fixé sur ce dernier de manière à pouvoir s'insérer rapidement dans le palier (25, 26) de l'extension correspondante, sans outillage, le bras (28, 29) étant situé à l'extérieur de l'extension (20, 21).

8. Dispositif selon la revendication 7, caractérisé par le fait que l'axe (33, 34) fixé sur chaque avant-bras (28, 29) comporte un prolongement (35, 36) de diamètre plus faible destiné à se trouver entre les extensions (20, 21) du bâti lorsque le bras est monté, ce prolongement pouvant servir le cas échéant à l'accrochage d'accessoires, notamment à l'accrochage d'un porte-masse.

9. Dispositif selon la revendication 8, caractérisé par le fait que le prolongement (35, 36) est muni de moyens d'arrêt (37, 37a) de l'axe (33, 34) relativement au palier (25, 26), avec interposition éventuelle de rondelles (38), suivant la direction axiale de ce palier.

10. Dispositif selon la revendication 8, caractérisé par le fait que le prolongement (35, 36) de chaque axe (33, 34) a une longueur réduite de sorte qu'un espace suffisant existe entre les extrémités en regard des prolongements, lorsque les deux avant-bras (28, 29) sont montés, pour le passage d'une transmission mécanique à partir de la prise de force avant (F) du tracteur.

11. Dispositif selon la revendication 1 ou 5, caractérisé par le fait que chaque avant-bras (28, 29) comporte, vers son extrémité arrière, un piton (41) orienté sensiblement orthogonalement à la direction longitudinale de l'avant-bras et situé au-delà de l'axe d'articulation (33, 34) de l'avant-bras, ce piton (41) étant propre à traverser une ouverture (42) prévue dans une butée (39, 40) solidaire du bâti (19), située au-dessus de la partie arrière de l' avant-bras.

12. Dispositif selon la revendication 11, caractérisé par le fait que le piton (41) reçoit un jeu de rondelles (44) d'épaisseur variable et est muni de moyens d'arrêt (43, 43a) de l'oscillation de l' avant-bras, de manière à permettre divers réglages possibles pour cet avant-bras (28, 29), à savoir oscillant, fixe, ou à inclinaison forcée.

13. Dispositif selon la revendication 9, caractérisé par le fait que les moyens d'arrêt (37, 37a) de l'axe (33, 34) d'un avant-bras (28, 29), relativement au palier (25, 26) sont agencés pour permettre un déverrouillage rapide de l'avant-bras en vue d'un coulissement transversal de sorte que lorsque l' avant-bras (28, 29) est équipé à son extrémité d'une rotule (32) à alésage, il soit possible, par coulissement transversal, d'amener l'alésage de cette rotule en face d'un têton (45) porté par l'ossature (4), en position haute de stockage, et par un coulissement en sens inverse, d'engager le têton (45) dans l'alésage de ladite rotule pour assurer le verrouillage en position de stockage.

14. Dispositif selon l'une des revendications précédentes, caractérisé par le fait qu'il est agencé de telle sorte que, les avant-bras (28, 29) repliés, en position de stockage, présentent une face avant sensiblement verticale ayant fonction de bouclier.

## Claims

1. Front lifting device, for an agricultural tractor or the like, making it possible to hitch a tool to the front of the tractor for the purpose of raising and/or lowering it, comprising a framework (4, 104) intended to be fixed to the chassis of the tractor, the said framework being equipped, at the bottom, with lower securing means (A), extending forward articulated about a transverse spindle and at the ends of which the bottom two fastening points of a tool can be fastened, and, at the top, with a middle upper securing means (16) for connection with a third fastening point of the tool, and lifting means (14), particularly hydraulic ones, provided between the framework (4, 104) and the lower securing means in order to provide the ascending or descending movements, the lower securing means (A) comprising, on the one hand, a primary lower structure (19) articulated, at its rear part, to a transverse spindle (18) carried by the framework (4, 104), and equipped toward the front with two lateral longitudinal extensions (20, 21) in each of which is provided a transverse bearing (25, 26) and, on the other hand, a forearm (28, 29) associated with each longitudinal extension (20, 21) and articulated about a spindle (33, 34) carried by the abovementioned bearing, the assembly being such that in the working position the forearm (28, 29) extends the lateral extension forward, the said forearm extending, toward the rear, beyond its articulation spindle, it being possible for this forearm (28, 29), when it is devoid of any load, to be folded upward relative to the framework (4, 104) for a storage position, a fixed locking of the forearms (28, 29) in the top position being provided, characterized in that the lifting means (14) are joined to the lower structure (19) and to the framework (4, 104), that the two forearms (28, 29) are independent of one another, that each forearm (28, 29) comes to bear via its rear part, when it is in the working position, under a limit stop (39, 40) integral with the structure (19) so as to be blocked during the lifting of the structure and the raising of a load, and that the stationary locking of the forearms (28, 29) in the top position of the structure (19) makes it possible to prevent a movement of the structure (19) even if the operator, through carelessness, commands the lifting means (14).

2. Device according to Claim 1, characterized in that the framework (4) includes means (V) for locking the forearms (28, 29) of the structure (19) in the top position, by combination of the upward movement of the primary mobile lower structure (19), folding the forearms (28, 29) upward relative to the structure, and fastening the forearms (28, 29) to a support and locking member (45) provided on the framework (4).

3. Device according to Claim 2, characterized in that the support and locking member is made up of a stub (45).

4. Device according to Claim 3, characterized in that the end of the forearms (28, 29) is fastened to the stub (45).

5. Device according to Claim 1, characterized in that in order to lock the device when it is not in use the framework (104) includes, at the top, bearings (47, 48) similar to those (25, 26) carried by the extensions (20, 21) of the lower structure (19), these bearings (47, 48) being equipped, when the assembly is in the working position, with auxiliary spindles (49, 50) similar to those (33, 34) of the forearms, equipped with prolongations (51, 52) longer than those (35, 36) of the forearms, the assembly being such that for locking of the forearms (28, 29) in the top position of the lower structure (19), the auxiliary spindles (49, 50) of the bearings of the framework (104) are withdrawn from these bearings (47, 48), whereas the forearms (28, 29) are removed from the extensions (20, 21) and turned round so as to be placed inside the framework (104) with their spindles (33, 34) received in the top bearings (47, 48) of the framework, whereas the auxiliary spindles (49, 50) are mounted in the bearings (25, 26) of the lateral extensions (20, 21) with their prolongations (51, 52) pointed inward, the assembly being such that the ends of the forearms (28, 29) become fastened to the prolongations of the said auxiliary spindles when the lower structure (19) is lifted.

6. Device according to Claim 1 or 5, characterized in that each lateral extension (20, 21) comprises two members (20a, 20b; 21a, 21b) separated by a space in which there is received a joining member (22, 23) constituting one end of the lifting means (14), this member being joined to the extension by a spindle (24) passing through openings provided in the members, whereas the bearing provided at the end of the lateral extension is made up of a bush (25, 26) of transverse axis.

7. Device according to Claim 6, characterized in that the articulation spindle (33, 34) for each forearm (28, 29) is fixed to the latter so that it can be inserted rapidly into the bearing (25, 26) of the corresponding extension, without tooling, the arm (28, 29) being situated outside the extension (20, 21).

8. Device according to Claim 7, characterized in that the spindle (33, 34) fixed to each forearm (28, 29) includes a prolongation (35, 36) of smaller diameter intended to be located between the extensions (20, 21) of the structure when the arm is mounted, it being possible for this prolongation to serve, if need be, for fastening accessories, particularly for fastening a weight holder.

9. Device according to Claim 8, characterized in that the prolongation (35, 36) is equipped with means (37, 37a) for stopping the spindle (33, 34) relative to the bearing (25, 26), with possible interposition of washers (38), in the axial direction of this bearing.

10. Device according to Claim 8, characterized in that the prolongation (35, 36) of each spindle (33, 34) has a reduced length so that there is enough space between the facing ends of the prolongations, when the two forearms (28, 29) are mounted, for the passage of a mechanical transmission from the front power take-off (F) of the tractor.

11. Device according to Claim 1 or 5, characterized in that each forearm (28, 29) includes, toward its rear end, a peg (41) orientated substantially orthogonally to the longitudinal direction of the forearm and situated beyond the articulation spindle (33, 34) of the forearm, this peg (41) being capable of passing through an opening (42) provided in a limit stop (39, 40) integral with the structure (19), and situated above the rear part of the forearm.

12. Device according to Claim 11, characterized in that the peg (41) receives a set of washers (44) of variable thickness and is equipped with means (43, 43a) for stopping the oscillation of the forearm so as to allow various possible settings for this forearm (28, 29), namely oscillating, fixed, or with forced inclination.

13. Device according to Claim 9, characterized in that the means (37, 37a) for stopping the spindle (33, 34) of a forearm (28, 29) relative to the bearing (25, 26) are set out so as to allow rapid unlocking of the forearm for the purpose of transverse sliding so that when the forearm (28, 29) is equipped at its end with a ball joint (32) for the bore, it is possible, by transverse sliding, to bring the bore of this ball joint to face a stub (45) carried by the framework (4) in the top storage position, and, by sliding in the opposite direction, to engage the stub (45) in the bore of the said ball joint in order to provide locking in the storage position.

14. Device according to one of the preceding claims, characterized in that it is set out so that the forearms (28, 29), folded up in the storage position, have a substantially vertical front face fulfilling a shield function.

## Patentansprüche

1. Vordere Hebevorrichtung für eine landwirtschaftliche Zugmaschine oder dergleichen, die das Ankoppeln eines Werkzeugs an der Vorderseite der Zugmaschine ermöglicht, um dieses anzuheben und/oder abzusenken, mit einem Gerüst (4, 104) zum Anbringen an dem Chassis der Zugmaschine, wobei das Gerüst im unteren Teil mit einer sich nach vom erstreckenden unteren Verbindungseinrichtung (A) versehen ist, die um eine Querachse schwenkbar gelagert ist, und an deren Enden die beiden unteren Einhängepunkte eines Werkzeugs eingesetzt werden können, und wobei das Gerüst im oberen Teil eine obere mittlere Verbindungseinrichtung (16) zur Verbindung mit einem dritten Einhängepunkt des Werkzeugs sowie eine insbesondere hydraulische Hebeeinrichtung (14) aufweist, die zwischen dem Gerüst (4, 104) und der unteren Verbindungseinrichtung vorgesehen ist, um die Hebe- oder Senkbewegungen zu ermöglichen, wobei die untere Verbindungseinrichtung (A) einerseits einen primären unteren Rahmen (19) aufweist, der an seinem hinteren Bereich an einer von dem Gerüst (4, 104) getragenen Querachse (18) gelagert ist und am vorderen Ende zwei langgestreckte seitliche Verlängerungen (20, 21) aufweist, in denen jeweils ein Querlager (25, 26) vorgesehen ist, und wobei die Verbindungseinrichtung andererseits jeweils mit einer langgestreckten Verlängerung (20, 21) verbundene und um eine von dem Lager getragene Achse (33, 34) schwenkbar gelagerte Auslegerarme (28, 29) aufweist, wobei die Einheit derart ausgebildet ist, daß der jeweilige Auslegerarm (28, 29) in der Arbeitsstellung die seitlichen Verlängerungen nach vom verlängert, wobei sich der Auslegerarm nach hinten über seine Schwenkachse hinaus erstreckt, und wobei der Auslegerarm (28, 29) im lastfreien Zustand relativ zum Gerüst (4, 104) in eine Ruhestellung nach oben geschwenkt werden kann, wobei eine feste Verriegelung der Auslegerarme (28, 29) in der angehobenen Position vorgesehen ist, dadurch gekennzeichnet, daß die Hebeeinrichtung (14) mit dem unteren Rahmen (19) und dem Gerüst (4, 104) verbunden ist, daß die beiden Auslegerarme (28, 29) voneinander unabhängig sind, daß jeder der Auslegerarme (28, 29) in der Arbeitsstellung in Anlage unter einen fest mit dem Rahmen (19) verbundenen Anschlag (39, 40) gelangt, derart, daß er beim Anheben des Rahmens und beim Aufheben einer Last blockiert ist, und daß die feste Verriegelung der Auslegerarme (28, 29) in der angehobenen Stellung des Rahmens (19) ermöglicht, eine Bewegung des Rahmens (19) zu verhindern, selbst wenn der Bediener aus Unachtsamkeit die Hebeeinrichtung (14) betätigt.

2. Vorrichtung nach Anspruch 1, dadurch gekennzeichnet, daß das Gerüst (4) eine Einrichtung (V) zum Verriegeln der Auslegerarme (28, 29) des Rahmens (19) in der angehobenen Position durch eine Kombination der Bewegung des bewegbaren primären unteren Rahmens (19) nach oben, ein Schwenken der Auslegerarme (28, 29) nach oben relativ zum Rahmen, und ein Einhaken der Auslegerarme (28, 29) an einem an dem Gerüst (4) vorgesehenen Stütz- und Verriegelungselement (45), aufweist.

3. Vorrichtung nach Anspruch 2, dadurch gekennzeichnet, daß das Stütz- und Verriegelungsorgan aus einem Zapfen (45) besteht.

4. Vorrichtung nach Anspruch 3, dadurch gekennzeichnet, daß die Enden der Auslegerarme (28, 29) an dem Zapfen (45) einhaken.

5. Vorrichtung nach Anspruch 1, dadurch gekennzeichnet, daß das Gerüst (104) zum Verriegeln der Vorrichtung während des Nichtgebrauchs im oberen Bereich Lager (47, 48) aufweist, die den von den Verlängerungen (20, 21) des unteren Rahmens (19) getragenen Lagern (25, 26) ähnlich sind, wobei die Lager (47, 48) in der Arbeitsstellung der Einheit mit Zusatzachsen (49, 50) versehen sind, die denjenigen (33, 34) der Auslegerarme ähnlich und mit Verlängerungen (51, 52) versehen sind, die länger als diejenigen (35, 36) der Auslegerarme sind, wobei die Einheit derart ausgebildet ist, daß zum Verriegeln der Auslegeranne (28, 29) in der angehobenen Stellung des unteren Rahmens (19) die Zusatzachsen (49, 50) der Lager des Gerüsts (104) aus den Lagern (47, 48) gezogen werden, während die Auslegerarme (28, 29) von den Verlängerungen (20, 21) gelöst und derart zurückbewegt werden, daß sie im Inneren des Gerüsts (104) angeordnet sind, wobei ihre Achsen (33, 34) in den oberen Lagern (47, 48) des Gerüsts aufgenommen sind, während die Zusatzachsen (49, 50) in den Lagern (25, 26) der seitlichen Verlängerungen (20, 21) angebracht und ihre Verlängerungen (51, 52) nach innen gerichtet sind, wobei die Einheit derart ausgebildet ist, daß sich die Enden der Auslegerarme (28, 29) an den Verlängerungen der Zusatzachsen festhaken, wenn der untere Rahmen (19) angehoben wird.

6. Vorrichtung nach Anspruch 1 oder 5, dadurch gekennzeichnet, daß jede seitliche Verlängerung (20, 21) zwei Schenkel (20a, 20b; 21a, 21b) aufweist, die durch einen Raum voneinander getrennt sind, in denen ein Verbindungsorgan (22, 23) aufgenommen ist, das ein Ende der Hebeeinrichtung (14) bildet, wobei dieses Organ mit der Verlängerung durch eine Achse (24) verbunden ist, die sich durch in den Schenkeln vorgesehene Öffnungen erstreckt, während das am Ende der seitlichen Verlängerung vorgesehene Lager aus einer querverlaufenden Achsmanschette (25, 26) besteht.

7. Vorrichtung nach Anspruch 6, dadurch gekennzeichnet, daß die Schwenkachse (33, 34) jedes Auslegerarms (28, 29) an dieser derart befestigt ist, daß er ohne Werkzeug schnell in das Lager (25, 26) der entsprechenden Verlängerung einsetzbar ist, wobei sich der Arm (28, 29) auf der Außenseite der Verlängerung (20, 21) befindet.

8. Vorrichtung nach Anspruch 7, dadurch gekennzeichnet, daß die an jedem der Auslegerarme (28, 29) befestigte Achse (33, 34) eine Verlängerung (35, 36) von geringerem Durchmesser aufweist, die sich bei montiertem Arm zwischen den Verlängerungen (20, 21) des Rahmens befinden soll, wobei diese Verlängerung gegebenenfalls zur Befestigung von Zubehör, insbesondere einer Trägervorrichtung, verwendet werden kann.

9. Vorrichtung nach Anspruch 8, dadurch gekennzeichnet, daß die Verlängerung (35, 36) unter eventueller Zwischenfügung von Scheiben (38) mit einer Einrichtung (37, 37a) für das Begrenzen der in Axialrichtung des Lagers erfolgenden Bewegung der Achse (33, 34) in bezug auf das Lager (25, 26) versehen ist.

10. Vorrichtung nach Anspruch 8, dadurch gekennzeichnet, daß die Verlängerung (35, 36) jeder Achse (33, 34) eine verkürzte Länge aufweist, derart, daß bei montierten Auslegearmen (28, 29) zwischen den gegenüberliegenden Enden der Verlängerung ein ausreichender Platz für das Durchführen einer mechanischen Transmission ausgehend von der Frontzapfwelle (F) der Zugmaschine besteht.

11. Vorrichtung nach Anspruch 1 oder 5, dadurch gekennzeichnet, daß jeder Auslegerarm (28, 29) in der Nähe des hinteren Endes einen Zapfen (41) aufweist, der im wesentlichen orthogonal zur Längserstreckung des Auslegerarms verläuft und jenseits der Schwenkachse (33, 34) des Auslegerarms angeordnet ist, wobei der Zapfen (41) geeignet ist, eine Öffnung (42) zu durchdringen, die in einem fest mit dem Rahmen (19) verbundenen und oberhalb des hinteren Bereichs des Auslegerarms angeordneten Anschlag (39, 40) vorgesehen ist.

12. Vorrichtung nach Anspruch 11, dadurch gekennzeichnet, daß der Zapfen (41) einen Satz Scheiben (44) mit variablem Durchmesser aufnimmt und mit Einrichtungen (43, 43a) zum Begrenzen von Schwingungen des Auslegerarms versehen ist, derart, daß er verschiedene mögliche Einstellungen des Auslegerarms (28, 29) zuläßt, nämlich eine schwingende, eine feste oder eine zwangsweise geneigte Einstellung.

13. Vorrichtung nach Anspruch 9, dadurch gekennzeichnet, daß die Einrichtung (37, 37a) der Achse (33, 34) eines Auslegerarms (28, 29) zum Begrenzen der Bewegung relativ zum Lager (25, 26) derart angeordnet ist, daß sie eine schnelle Entriegelung des Auslegerarms zuläßt, um ein quergerichtetes Gleiten zu ermöglichen, derart, daß es möglich ist, wenn der Auslegerarm (28, 29) mit einem eine Bohrung aufweisenden Zapfen (32) versehen ist, die Bohrung des Zapfens in der angehobenen Ruhestellung durch gleitendes Verschieben in Querrichtung einem an dem Gerüst (4) vorgesehenen Stift (45) gegenüberliegend anzuordnen und durch gleitendes Verschieben in der entgegengesetzten Richtung den Stift (45) in die Bohrung des Zapfens einzuführen, um die Verriegelung in der Ruhestellung zu erreichen.

14. Vorrichtung nach einem der vorhergehenden Ansprüche, dadurch gekennzeichnet, daß sie derart angeordnet ist, daß die angehobenen Auslegerarme (28, 29) in der Ruhestellung eine im wesentlichen vertikale Vorderfläche aufweisen, die als Schild dient.
